# EUROPÄISCHE PATENTSCHRIFT

(11) **EP 3 717 300 B1**
(45) Veröffentlichungstag und Bekanntmachung des Hinweises auf die Patenterteilung: **01.09.2021**
(21) Anmeldenummer: 18821689.9
(22) Anmeldetag: 30.11.2018
(51) Int. Cl.: B60L 53/14, H02M 7/08, B60L 53/22, B60L 53/10, B60L 53/30

(54) **LADEANORDNUNG FÜR EIN ELEKTROFAHRZEUG AN EINEM MITTELSPANNUNGSNETZ SOWIE VERFAHREN ZU DEREN BETREIBEN**
CHARGE ARRANGEMENT FOR AN ELECTRIC VEHICLE ON A MEDIUM VOLTAGE NETWORK AND METHOD OF OPERATION THEREOF
AGENCEMENT DE CHARGE POUR UN VÉHICULE ÉLECTRIQUE SUR UN RÉSEAU À TENSION MOYENNE ET SON PROCÉDÉ DE FONCTIONNEMENT

(30) Priorität: 01.12.2017 DE 102017128573
(43) Veröffentlichungstag der Anmeldung: 07.10.2020
(73) Patentinhaber: Scienlab Beteiligungsgesellschaft mbH, 44801 Bochum (DE)
(72) Erfinder: STENTENBACH, Julian, 44805 Bochum (DE)
(74) Vertreter: Osterhoff, Utz
(86) Internationale Anmeldenummer: PCT/DE2018/100974
(87) Internationale Veröffentlichungsnummer: WO 2019/105513

(56) Entgegenhaltungen:
- EP-A1- 2 930 813
- DE-A1-102010 014 417
- DE-A1-102011 084 362
- DE-A1-102013 211 265
- DE-A1-102015 110 023
- DE-A1-102017 107 355
- MOHSEN AHMADI ET AL: "A review on topologies for fast charging stations for electric vehicles", 2016 IEEE INTERNATIONAL CONFERENCE ON POWER SYSTEM TECHNOLOGY (POWERCON), 2016, Seiten 1-6, XP055556077, DOI: 10.1109/POWERCON.2016.7753886 ISBN: 978-1-4673-8848-1

## Beschreibung

Die vorliegende Erfindung betrifft eine Ladeanordnung für ein Elektrofahrzeug mit einer Traktionsbatterie, welche an einem Mittelspannungsnetz angeschlossen ist gemäß den Merkmalen von Anspruch 1 sowie ein Verfahren zum Betreiben der Ladeanordnung gemäß Anspruch 10, 11 und 12.

Für das elektrische Fahren eines Elektro- oder Hybridfahrzeuges ist es notwendig, dass die Batterie, nachfolgend auch Traktionsbatterie genannt, des Elektrofahrzeuges über eine externe Energiequelle geladen wird. Dabei wird die Zuführung der Energie über ein Stecksystem mit einem Ladekabel realisiert, mit dem die externe Energiequelle mit dem Fahrzeug verbunden wird, so dass der Ladevorgang stattfinden kann.

Damit ein Standard erreicht wird, wird der Ladevorgang in verschiedenen Normungen definiert. Dabei wird grundsätzlich zwischen einem AC-Ladevorgang und einem DC-Ladevorgang unterschieden. Bei einem AC-Ladevorgang wird das Elektrofahrzeug mit dem Ladekabel direkt an einer Steckdose angeschlossen, beispielsweise an einer Haushaltssteckdose, welche ein- oder dreiphasig ist. Die übertragbaren Leistungen sind hierbei auf etwa 22 kW begrenzt.

Um höhere Ladeleistungen zu realisieren, wird die sogenannte DC-Ladetechnik verwendet. Bei dieser wird durch eine externe Ladestation eine DC-Spannung bereitgestellt, die über ein Ladekabel an das Fahrzeug und innerhalb des Fahrzeuges direkt an die Traktionsbatterie weitergegeben wird. Stand der Technik ist, dass damit Ladeleistungen von bis zu 350 kW erreicht werden.

Hierzu werden Ladestationen bereitgestellt, die jetzt und in Zukunft - analog zu Tankstellen für Verbrennungskraftmaschinen - die Möglichkeit bereitstellen sollen, Elektrofahrzeuge zu laden. Solche Ladestationen können auch als Ladesäule bezeichnet werden.

Stand der Technik ist es, dass Ladestationen an ein Niederspannungsnetz angeschlossen sind und hierüber mit einer Versorgungsspannung versorgt werden, welche wiederum gewandelt wird und als Ladespannung an das Kraftfahrzeug abgegeben wird. Die Niederspannungsnetze sind als TN-Netz bzw. TN-System ausgeführt. TN steht dabei für "terre neutre".

Das Elektrofahrzeug wird dann je nach bordseitigem Lademanagement über die AC-Spannung oder über die DC-Spannung geladen. Beim DC-Ladevorgang schreibt die Norm IEC 61851-23 vor, dass zur Gewährleistung der elektrischen Sicherheit die DC-Spannung zum Fahrzeug als IT-Netz ausgeführt werden muss. IT steht dabei für "isolé terre". Aus diesem Grunde sind die Ladestationen mit einer Potentialtrennung ausgestattet, wobei diese typisch zwischen dem Umrichter und einem Ausgangssteller geschaltet wird. Die Potentialtrennung wird dabei gemäß dem Stand der Technik durch einen Resonanztransformator realisiert.

Zusammengefasst bedeutet dies jedoch, dass die Ladestationen sowie die unmittelbar die Ladestationen umgebende Infrastruktur relativ komplex ausgebildet sind. Es müssen mehrere elektrische Bauteile von einer verteilten Spannung, die zumeist eine Mittelspannung ist, in der immobilen Ladeinfrastruktur vorgesehen werden, wobei zum einen die Investitionskosten zum Aufbau von Ladestationen, jedoch auch die Wartungs- und Unterhaltskosten einer solchen Ladestation hoch sind. Diese Kosten müssen letztendlich durch den Verbraucher durch einen erhöhten Kilowatt-Stunden-Preis getragen werden. Die elektrischen Bauteile müssen bei der Erstmontage gekauft werden sowie im Betrieb gewartet werden und bei Bedarf ausgetauscht werden. Zudem sind mitunter Betriebskosten hoch, da Kühlmaßnahmen für die elektrischen Bauteile durchgeführt werden müssen.

Aus der DE 10 2015 110 023 A1 ist eine Ladeanordnung bekannt, bei welcher eine Mittelspannung in eine Niederspannung umgewandelt wird und direkt für einen DC-Ladevorgang verwendet wird.

Aus der DE 10 2011 084 362 A1 ist ein Onboard-Charger in einem Kraftfahrzeug bekannt, welche an ein TN-Ladesystem und auch an ein IT-Ladesystem angeschlossen werden kann.

Aus der EP 2 930 813 A1 ist ein ortsfester Mittelspannungstransformator bekannt, an den örtlich getrennt, eine Niederspannungsladestation angeschlossen ist, wobei in die Leitung eine entsprechende Messtechnik eingegliedert ist.

Aufgabe der vorliegenden Erfindung ist es daher, eine Ladeanordnung mit wenig Bauteilen bereitzustellen, bei jedoch gleichzeitig gegenüber dem Stand der Technik gesteigerter Ladeleistung, die es ermöglicht, eine Ladeinfrastruktur für Elektrofahrzeuge aufzubauen.

Die zuvor genannte Aufgabe wird mit einer Ladeanordnung mit den Merkmalen im Anspruch 1 gelöst.

Ein verfahrenstechnischer Teil der Aufgabe wird mit den Merkmalen im Anspruch 10 sowie 11 und 12 gelöst.

Vorteilhafte Weiterbildungen der erfindungsgemäßen Ladeanordnung sind in den abhängigen Ansprüchen aufgeführt.

Die Ladeanordnung für ein Elektrofahrzeug mit einer Traktionsbatterie weist eine Ladestation auf, welche direkt angeschlossen ist an ein Mittelspannungsnetz. Ferner weist die Ladestation ein Ladekabel zur Koppelung mit dem Elektrofahrzeug auf. Die Ladeanordnung zeichnet sich nunmehr erfindungsgemäß dadurch aus, dass in der Ladestation ein Mittelspannungstransformator angeordnet ist, an welchem auf einer Primärseite die Mittelspannung anliegt und auf einer Sekundärseite unmittelbar mindestens ein IT-Niederspannungsnetz und ein davon elektrisch getrenntes TN-Niederspannungsnetz ausgebildet sind.

Der erfindungswesentliche Vorteil besteht darin, dass sowohl AC- als auch DC-Ladevorgänge mit der erfindungsgemäßen Ladestation durchgeführt werden können. Gleichzeitig werden die benötigten Bauteile zum Aufbau der Ladestation gegenüber aus dem Stand der Technik bekannten Ladestationen reduziert. Dies begründet sich insbesondere darin, dass das IT-Niederspannungsnetz unmittelbar auf der Sekundärseite des Mittelspannungstransformators ausgebildet ist, wobei der Mittelspannungstransformator selbst auf der Primärseite unmittelbar an ein Mittelspannungsnetz angeschlossen ist. Weitere Leistungstransformatoren von der Sekundärseite des Mittelspannungstransformators bis zum Elektrofahrzeug können somit entfallen.

Im Rahmen dieser Erfindung ist unter einem Elektrofahrzeug ein Elektrokraftfahrzeug, mithin ein Straßenfahrzeug, beispielsweise ein Personenkraftwagen oder Lastkraftwagen, zu verstehen. Ebenfalls können Flurförderfahrzeuge oder auch Spezialfahrzeuge verstanden werden. Unter einem Elektrofahrzeug können jedoch auch Luftfahrzeuge oder Wasserfahrzeuge verstanden werden. Diese können rein elektrisch betrieben sein oder auch als sogenanntes Hybridfahrzeug mit einem zusätzlichen Motor zur Erzeugung von elektrischer Energie, beispielsweise einer Verbrennungskraftmaschine, ausgestattet sein.

Ein Mittelspannungsnetz ist ein in der Infrastruktur eines jeweiligen Landes, in der eine solche Ladeanordnung aufgestellt werden soll, vorhandene Versorgungsspannung. Diese beträgt üblicherweise mehr als 1.000 V und ist kleiner als 100 kV. Typischerweise liegt eine Mittelspannung zwischen 5 kV und 25 kV, insbesondere bei 10 kV, 12 kV oder auch 20 kV. Die Niederspannung eines Niederspannungsnetzes ist kleiner als 1.500 V und liegt typischerweise zwischen 200 V und 800 V, vorzugsweise von 400 V und 690 V.

Das Mittelspannungsnetz, das TN-Niederspannungsnetz und das IT-Niederspannungsnetz sind bevorzugt in drei-phasig ausgebildet. Diese können jedoch auch ein-, zwei- oder mehr-phasig realisiert werden.

Das IT-Niederspannungsnetz und das davon elektrisch getrennte TN-Niederspannungsnetz sind untereinander potentialgetrennt. Sie sind also elektrisch nicht miteinander verbunden. Im Sinne der Erfindung können auch weitere IT-Niederspannungsnetze durch mindestens eine zusätzliche Sekundärwicklung an dem Mittelspannungstransformator ausgebildet sein. Die IT-Niederspannungsnetze sind auf der Sekundärseite dann ebenfalls elektrisch voneinander getrennt ausgebildet, mithin potentialgetrennt ausgebildet.

Die erfindungsgemäße Idee sieht nunmehr vor, dass für den DC-Ladevorgang kein zusätzlicher Transformator auf der Niederspannungsseite vorzusehen ist. Insbesondere entfällt in einer Ladesäule selber somit ein zusätzlicher Niederspannungstransformator. Der Mittelspannungstransformator wird direkt dazu genutzt, sowohl ein IT-Niederspannungsnetz als auch ein TN-Niederspannungsnetz bereitzustellen.

Das TN-Niederspannungsnetz kann dabei im Rahmen der Erfindung durch mindestens eine zusätzliche Sekundärwicklung direkt von dem Mittelspannungstransformator bereitgestellt werden. Das TN-Niederspannungsnetz wird dann direkt von dem Mittelspannungstransformator aus der Mittelspannung transformiert. Das TN-Niederspannungsnetz kann jedoch auch durch einen Niederspannungstransformator ausgebildet sein, wobei der Niederspannungstransformator dann in einem Sekundärkreis auf der Sekundärseite des Mittelspannungstransformators angeordnet ist. Erfindungswesentlich ist jedoch, dass direkt die Niederspannung des IT-Niederspannungsnetzes durch den Mittelspannungstransformator bereitgestellt wird.

An einem jeweiligen IT-Niederspannungsnetz ist zusätzlich dann ein Umrichter und/oder ein Ausgangssteller bzw. Ausgleichsteller vorgesehen. Der Umrichter ist beispielsweise ein "active front end" (AFE), ein "power factor correction" (PFC) oder ein Diodengleichrichter. Der Ausgleichssteller ist insbesondere ein DC/DC-Wandler.

Das IT-Niederspannungsnetz wird für einen DC-Ladevorgang verwendet. Das TN-Niederspannungsnetz wird für AC-Ladevorgänge verwendet. Heutige Elektrofahrzeug werden zumeist mit AC-Ladestandard ausgestattet. Viele Fahrzeuge weisen jedoch auch schon die kombinierte Möglichkeit auf, auch DC-Ladevorgänge durchzuführen. Aufgrund der höheren zu übertragenden Ladeleistung ist in Zukunft damit zu rechnen, dass ein größerer Teil von Elektrofahrzeugen DC-ladefähig ist.

Ein weiterer Vorteil ist, dass das TN-Niederspannungsnetz direkt zur AC-Ladung verwendet werden kann und dem Elektrofahrzeug über das Ladekabel unmittelbar zugeführt wird.

Ferner ist dann noch ein Schütz oder Schalter vorgesehen, welcher beispielsweise in einem Ladestecker integriert sein kann oder auf Seiten der Ladestation vorgesehen ist. Soll nunmehr eine elektrische Tankstelle aufgebaut werden, welche eine Vielzahl von Ladestationen aufweist, so eignet sich die erfindungsgemäße Ladeanordnung hierfür insbesondere. Es können somit durch die erfindungsgemäße Ladestation mit dem Mittelspannungstransformator beispielsweise gleichzeitig zwei, drei, vier oder mehr IT-Niederspannungsnetze ausgebildet sein. Dies wird realisiert durch mindestens eine, dem jeweiligen IT-Niederspannungsnetz zugehörige Wicklungsanordnung auf der Sekundärseite des Mittelspannungstransformators. Ferner ist gleichzeitig immer ein TN-Niederspannungsnetz ausgebildet. Somit kann das TN-Niederspannungsnetz zum gleichzeitigen AC-Laden von mehreren Elektrofahrzeugen genutzt werden. Ein jedes IT-Niederspannungsnetz wird zum Laden eines Elektrofahrzeuges genutzt. Es können mehrere Elektrofahrzeuge gleichzeitig an dem Mittelspannungstransformator geladen werden. Die vorliegende Erfindung betrifft somit auch die Verwendung einer Ladeanordnung zum Laden von mindestens einem Elektrofahrzeug bzw. mehreren Elektrofahrzeugen sowie ein Verfahren zum Betreiben der Ladeanordnung.

Hierzu ist ferner eine Lademanagementeinrichtung vorgesehen, wobei die Lademanagementeinrichtung dem Mittelspannungstransformator zugeordnet ist. Die Lademanagementeinrichtung gibt dabei für alle Niederspannungsnetze die maximal zulässige Leistung vor. Die Lademanagementeinrichtung gibt diese Werte dem jeweiligen Ladekommunikationsmodul, nachfolgend auch Kommunikationsmodul genannt, eines Elektrofahrzeuges und/oder eines Ladesteckers weiter, welches wiederum diese Information im Ladevorgang berücksichtigt. Beispielsweise kann in einem Ladestecker an einem jeden Ladekabel ein Kommunikationsmodul vorgesehen sein. Auf der Primärseite liegt somit die Mittelspannung an dem Mittelspannungstransformator an. Über das Kommunikationsmodul wird dann der jeweilige Energiebedarf für ein Elektrofahrzeug erfasst und über die Lademanagementeinrichtung derart geregelt oder gesteuert, dass dann eine Energieentnahme auf der Sekundärseite des Mittelspannungstransformators geregelt oder gesteuert wird für ein jeweiliges Niederspannungsnetz, insbesondere IT-Niederspannungsnetz.

Eine vorteilhafte Weiterbildung der Erfindung sieht ferner vor, dass in dem Ladekabel, insbesondere in dem Ladestecker eines Ladekabels, ein Spannungskonverter angeordnet ist. Dabei wird eine Spannung größer 900 V, insbesondere größer 1.000 V durch das Ladekabel übertragen und dann durch den Spannungskonverter in dem Ladestecker auf eine kleinere Ladespannung für das Elektrofahrzeug konvertiert. Dies bietet insbesondere den Vorteil, dass bei gleicher oder höherer Ladeleistung ein geringerer Durchmesser des Ladekabels ermöglicht wird. Hierdurch lassen sich sowohl die Kosten zur Herstellung des Ladekabels senken, da diese zumeist aus Kupfer bestehen und Kupfer als Edelmetall einen hohen Einkaufspreis mit sich bringt. Zum anderen wird das Handling eines Ladekabels verbessert, da das mit dem Ladekabel einhergehende, nicht unerhebliche Eigengewicht gesenkt werden kann, so dass ein jeweiliger Fahrer eines Elektrofahrzeuges vereinfacht die Koppelung des Ladesteckers zur Durchführung des Ladevorganges vornehmen kann.

Gleichzeitig kann der Spannungskonverter auch als Regel- bzw. Steuerungseinrichtung dienen, um den Ladevorgang mit dem Elektrofahrzeug durchzuführen. Somit kann zusätzliche Steuerungs- oder Regelungstechnik in der Ladestation entfallen, die ansonsten notwendig wäre, um zum einen mit dem Elektrofahrzeug zu kommunizieren, zum anderen um den Ladevorgang zu regeln bzw. zu steuern. Das Elektrofahrzeug kommuniziert somit mit dem Spannungskonverter in dem Ladestecker. Dieser greift dann die benötigte Spannung auf der Sekundärseite des Mittelspannungstransformators ab, leitet sie durch das Ladekabel und gibt sie dann an das Elektrofahrzeug konvertiert ab. Es ist somit möglich, die Leitungsquerschnitte der elektrischen Leiter in dem Ladekabel zu reduzieren bei mindestens gleichbleibender und/oder erhöhter, am Ladestecker zu Verfügung stehender Ladeleistung.

Im Rahmen der Erfindung ist es somit möglich, über das Ladekabel Spannungen von mehr als 900 V, insbesondere mehr als 1.000 V, bevorzugt mehr als 1.200 V zu übertragen. Eine realistische Obergrenze zur maximal zu übertragenden Spannung sollte jedoch bei maximal 10.000 V, bevorzugt bei 5.000 V liegen. Im Rahmen der Erfindung hat es sich als vorteilig erwiesen, wenn Spannungen von 1.000 V bis 1.500 V übertragen werden. In diesem Falle weist das IT-Niederspannungsnetz eine solche Spannung auf. Die eigentliche Ladespannung kann dann auf einen Bereich um 400 V bis 850 V konvertiert werden, insbesondere auf 400 V oder 800 V. Das Verhältnis von Ladespannung zu über das Ladekabel übertragener Spannung beträgt bevorzugt kleiner 0,9. Dies bedeutet, dass die Ladespannung kleiner 0,9 mal der über das Ladekabel übertragenen Spannung ist, insbesondere kleiner 0,85, besonders bevorzugt kleiner 0,8, insbesondere kleiner 0,75. Das Verhältnis sollte jedoch größer 0,1 sein.

Das in dem Ladestecker vorgesehene Kommunikationsmodul kann zum einen mit der Lademanagementeinrichtung der Ladestation kommunizieren. Es kann optional ergänzend auch mit dem Elektrofahrzeug, und hier mit dem Onboard-Lademanagementsystem des Elektrofahrzeuges, kommunizieren. Die Kommunikation kann kabelgebunden, jedoch auch drahtlos, beispielsweise über Bluetooth oder WLAN, erfolgen.

Die vorliegende Erfindung betrifft weiterhin ein Verfahren zum Betreiben der Ladeanordnung, wobei mindestens n-Elektrofahrzeuge gleichzeitig in verschiedenen IT-Niederspannungsnetzen auf der Sekundärseite des Mittelspannungstransformators geladen werden, n ist dabei größer gleich (≥) 2. Optional wird ein weiteres Elektrofahrzeug im TN-Niederspannungsnetz geladen. Die maximal zur Verfügung stehende Ladeleistung auf der Sekundärseite des Mittelspannungstransformators ist kleiner als die benötigte maximale Ladeleistung der n-Elektrofahrzeuge zusammen addiert. Insbesondere ist die maximale auf der Sekundärseite zur Verfügung stehende Ladeleistung kleiner als die 1,5fache maximal benötigte Ladeleistung eines Elektrofahrzeuges. Bevorzugt entspricht die Ladeleistung auf der Sekundärseite des Mittelspannungstransformators gleich der maximal benötigten Ladeleistung eines Elektrofahrzeuges. Damit nunmehr alle angeschlossenen Elektrofahrzeuge bestmöglich geladen werden können, greift eine Lademanagementeinrichtung ein, wenn die zu einem Zeitpunkt benötigte Ladeleistung, die alle Elektrofahrzeuge dann abrufen, größer ist als die zur Verfügung stehende Ladeleistung auf der Sekundärseite, indem für ein oder mehrere Elektrofahrzeuge die jeweils dem Elektrofahrzeug zur Verfügung gestellte Ladeleistung temporär reduziert wird.

Dies bringt erfindungsgemäß den Vorteil, dass jedes Elektrofahrzeug bestmöglich geladen werden kann, gleichzeitig jedoch die Dimensionierung des Mittelspannungstransformators im Verhältnis dazu recht klein ausfallen kann. Die anfallenden Kosten bei der Einrichtung der erfindungsgemäßen Ladeanordnung sowie auch beim Betreiben der Ladeanordnung können somit reduziert werden.

Ein weiteres erfindungsgemäß vorteilhaftes Verfahren sieht vor, dass beim Betreiben der eingangs beschriebenen Ladeanordnung die maximal verfügbare Ladeleistung auf der Sekundärseite des Mittelspannungstransformators temporär um bis das 1,5fache überschritten wird. Insbesondere werden hierzu Niederfrequenztransformatoren verwendet, die in einem Hertzbereich kleiner 100 Hertz, besonders bevorzugt bei 50 oder 60 Hertz, arbeiten. Eine Überschreitung um bis das 1,5fache, der auf der Sekundärseite maximal zur Verfügung stehenden Ladeleistung, ist für einen Zeitbereich kleiner 10 Minuten, insbesondere kleiner 5 Minuten, unkritisch und bedarf insbesondere keiner gesteigerten Kühlmaßnahmen oder ähnlichem. Somit kann ebenfalls ein kleiner dimensionierter Mittelspannungstransformator genutzt werden, um gleichzeitig mehrere Fahrzeuge mit der größtmöglichen für jedes Fahrzeug zur Verfügung zu stellenden Ladeleistung geladen werden.

Insbesondere ist es jedoch mit der eingangs beschriebenen Ladeanordnung möglich, dass sowohl in dem IT-Niederspannungsnetz ein Elektrofahrzeug mit einem DC-Ladevorgang geladen wird und zumindest temporär gleichzeitig in dem TN-Niederspannungsnetz ein weiteres Elektrofahrzeug mit einem AC-Ladevorgang geladen wird.

Ein besonderer Vorteil ist neben dem oben genannten Verfahren zum Betreiben weiterhin, dass der Mittelspannungstransformator zu einem günstigeren Strompreis vom Energieanbieter betrieben werden kann, da die kWh im Mittelspannungsnetz günstiger ist als eine kWh, die in einem Niederspannungsnetz vom Energielieferanten bezogen wird.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1: eine Ladeanordnung gemäß dem Stand der Technik,
- Figur 2: eine erfindungsgemäße Ladeanordnung mit einem IT-Nieder-spannungsnetz und einem TN-Niederspannungsnetz,
- Figur 3: eine Ausgestaltungsvariante der vorliegenden Erfindung mit zusätzlichem Niederspannungstransformator zur Ausbildung des TN-Niederspannungsnetzes,
- Figur 4a und b: je eine Ausgestaltungsvariante der erfindungsgemäßen Ladean-ordnung mit 2 bis n IT-Niederspannungsnetzen sowie einem TN-Niederspannungsnetz,
- Figur 5: eine Ausgestaltungsvariante analog zur Figur 4, jedoch mit zusätzlichem Niederspannungstransformator,
- Figur 6: ein Leistungs-Zeit-Diagramm zum Betreiben einer erfindungsgemäßen Ladeanordnung bei mehreren Fahrzeugen

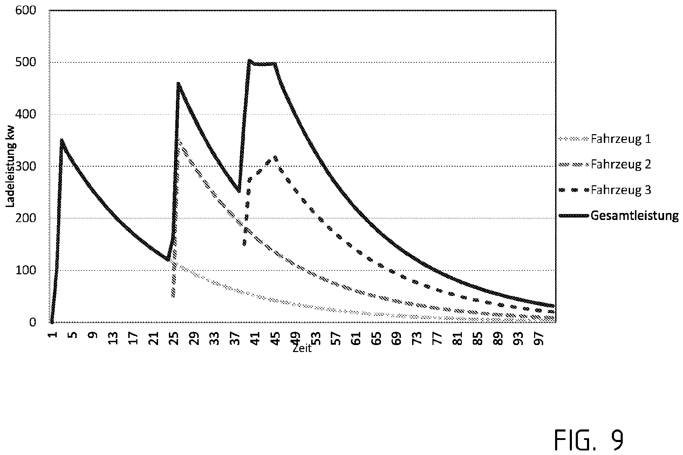

- Fig. 7 bis 9: verschiedene Leistungs-/Zeitdiagramme beim Betreiben einer Ladeanordnung.

In den Zeichnungen werden für gleiche oder ähnliche Bauteile dieselben Bezugszeichen verwendet, auch wenn eine wiederholte Beschreibung aus Vereinfachungsgründen entfällt.

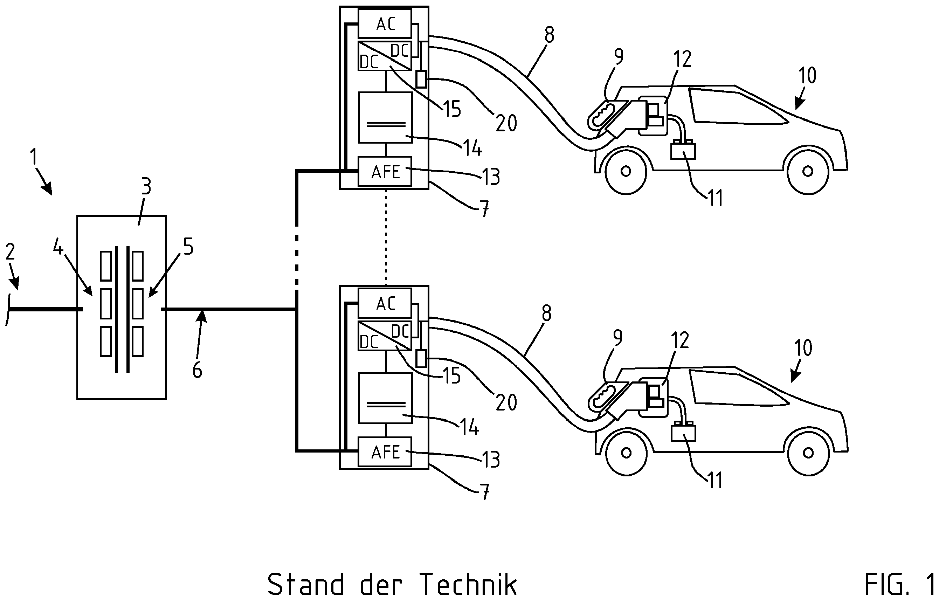

Figur 1 zeigt eine Ladeanordnung 1, wie sie aus dem Stand der Technik bekannt ist. Hierzu ist ein Mittelspannungnetz 2 ausgebildet sowie ein Mittelspannungstransformator 3, der auf seiner Primärseite 4 an das Mittelspannungsnetz 2 angeschlossen ist und auf seiner Sekundärseite 5 ein TN-Niederspannungsnetz 6 bereitstellt. An dieses Niederspannungsnetz 6 sind dann mehrere einzelne und jeweils separate Ladestationen 7 angeschlossen, wobei die Ladestationen 7 wiederum über ein jeweiliges Ladekabel 8 und einen Ladestecker 9 mit einem jeweiligen Elektrofahrzeug 10 gekoppelt sind. Das Elektrofahrzeug 10 weist eine Traktionsbatterie 11 auf, die entsprechend geladen wird. Das Elektrofahrzeug 10 weist ferner ein Onboard-Lademanagement 12 auf, welches mit der Ladesäule 7 kommuniziert und beispielsweise zwischen einem AC-Ladevorgang und einem DC-Ladevorgang auswählt. Ferner ist ein Umrichter 13, hier in Form eines activ front ends, in der Ladesäule vorgesehen sowie eine Potentialtrennung 14 und ein Ausgleichssteller 15 als DC/DC-Wandler. Somit sind in der Ladesäule 7 elektrische Bauteile unterzubringen.

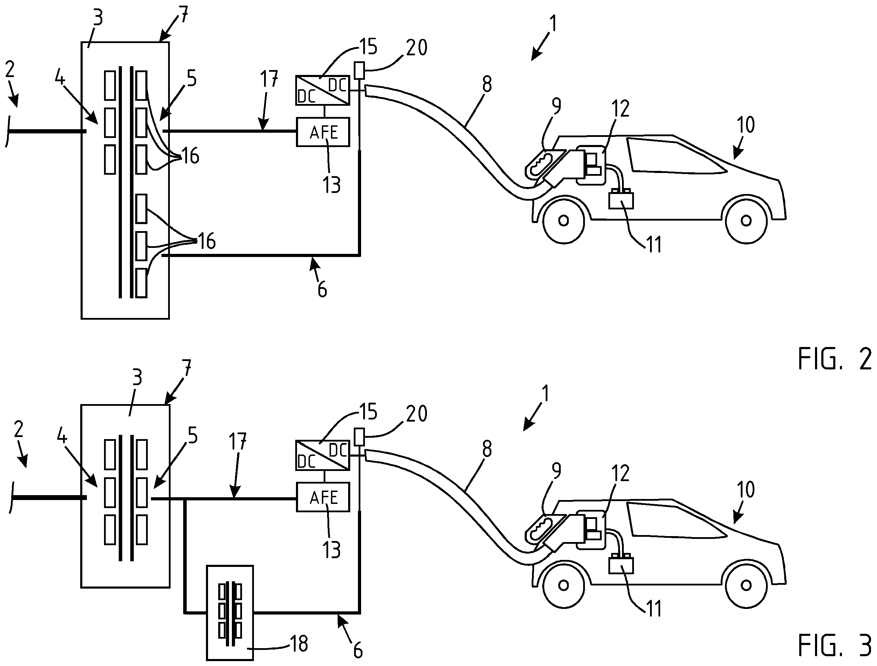

Figur 2 zeigt eine erfindungsgemäße Ladeanordnung 1. Hierbei ist ein Mittelspannungstransformator ebenfalls unmittelbar an ein Mittelspannungsnetz 2 auf der Primärseite 4 angeschlossen. Auf der Sekundärseite 5 des Mittelspannungstransformators 3 zeigt sich jedoch der erfindungsgemäße Unterschied im Vergleich zu Figur 1. Es sind unmittelbar Sekundärwicklungen 16 vorhanden, welche dann ein IT-Niederspannungsnetz 17 ausbilden bzw. mit Spannung versorgen. In diesem IT-Niederspannungsnetz 17 sind dann noch ein Umrichter 13 in Form eines activ front ends sowie ein Ausgleichssteller 15 in Form eines DC/DC-Wandlers vorgesehen. Sodann ist jedoch das Ladekabel 8 zur Durchführung des Ladevorganges direkt an das IT-Niederspannungsnetz 17 angeschlossen. Komplexe, insbesondere bauraumtechnische große Ladesäulen können somit entfallen. Die Ladesäule selber bzw. die Ladestation 7 wird durch den Mittelspannungstransformator 3 selbst ausgebildet bzw. ist der Mittelspannungstransformator 3 in die Ladestation 7 direkt integriert. Es sind weitere Sekundärwicklungen 16 vorgesehen, die gleichzeitig ein TN-Niederspannungsnetz 6 auf der Sekundärseite 5 ausbilden. Dieses ist hier unmittelbar auf der Sekundärseite 5 des Mittelspannungstransformators 3 ausgebildet. Das TN-Niederspannungsnetz 6 kann zur Durchführung eines AC-Ladevorganges unmittelbar mit dem Ladekabel 8 gekoppelt sein. Ein Schütz bzw. Schalter zur Trennung von AC- und DC-Ladevorgängen ist aus Vereinfachungsgründen nicht eingezeichnet. Das Onboard-Lademanagement 12 kann dann über den Ladestecker 9 und ein vorhandenes Kommunikationsmodul 20 den entsprechenden Ladevorgang wählen. Das Kommunikationsmodul 20 kann dabei im Bereich des Ladekabels, jedoch auch im Ladestecker angeordnet sein.

Eine alternative Ausgestaltungsvariante ist in Figur 3 dargestellt. Hier ist ebenfalls unmittelbar an dem Mittelspannungstransformator 3 auf der Sekundärseite 5 ein IT-Niederspannungsnetz 17 ausgebildet. Es ist jedoch weiterhin ein Niederspannungstransformator 18 vorgesehen, der dann das TN-Niederspannungsnetz 6 ausbildet. Der darauf folgende Aufbau in Richtung zu dem Elektrofahrzeug 10 ist analog zur Figur 2 ausgebildet.

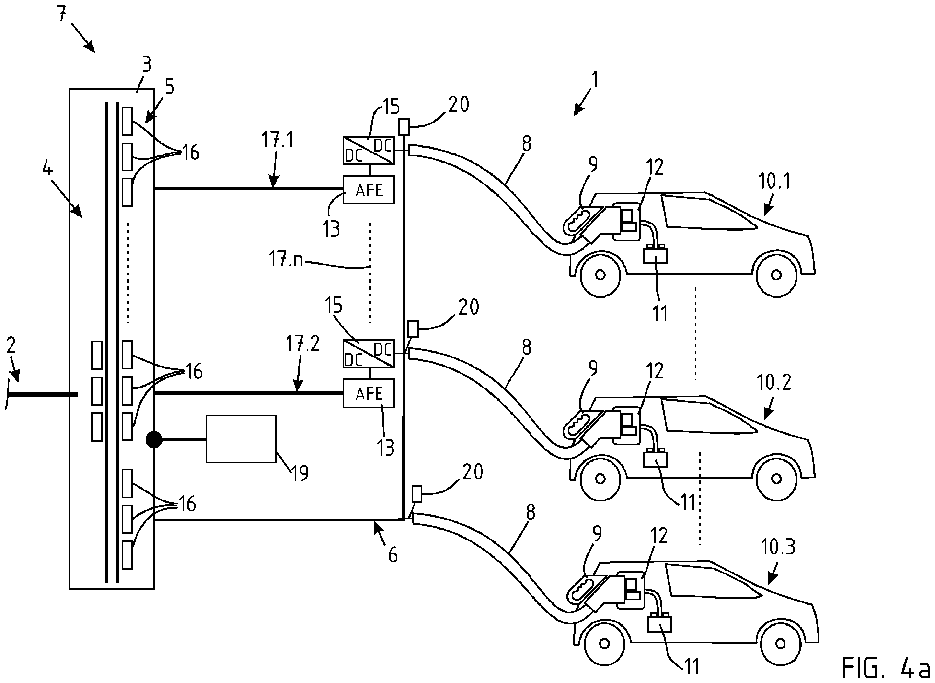

Figur 4a zeigt eine erfindungsgemäße kostengünstige Erweiterungsmöglichkeit der Ladeanordnung 1. Hier können zwei IT-Niederspannungsnetze 17.1 und 17.2 sowie theoretisch dazwischen angeordnet 17.n n weitere IT-Niederspannungsnetze auf der Sekundärseite 5 des Mittelspannungstransformators 3 ausgebildet sein. Jedem IT-Niederspannungsnetz 17 sind eigene Sekundärwicklungen 16 zugeordnet. Ebenfalls ausgebildet ist ein TN-Niederspannungsnetz 6, welchem ebenfalls eine eigene Sekundärwicklung 16 zugeordnet ist.

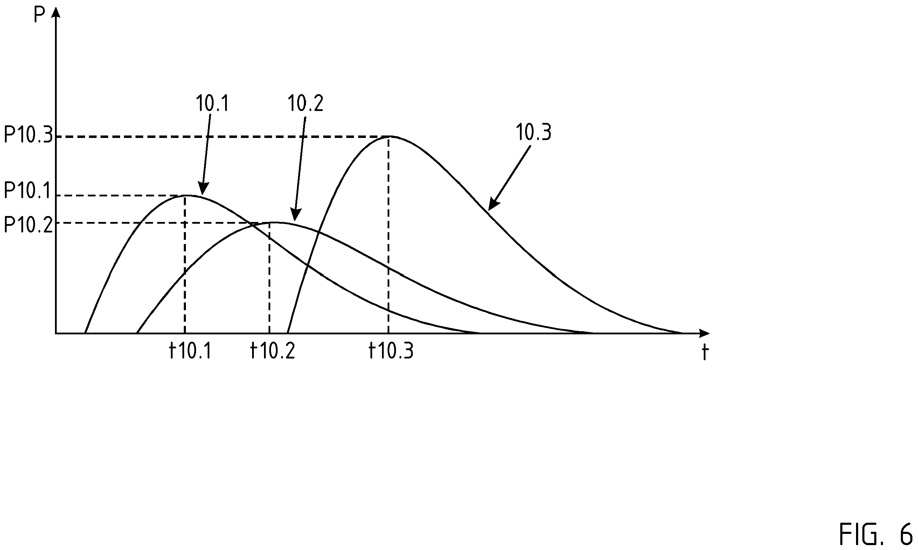

Zusätzlich ist eine Lademanagementeinrichtung 19 vorgesehen, welche den Ladevorgang der mehreren über den einen Mittelspannungstransformator 3 zu ladenden Elektrofahrzeuge 101, 10.2 regelt bzw. steuert. Nähere Erläuterungen dazu finden sich ebenfalls zu Figur 6.

Auch dargestellt in Figur 4a ist, dass ein drittes Elektrofahrzeug 10.3 zeitlich zumindest temporär parallel über das TN-Niederspannungsnetz 6 geladen wird, also als AC-Ladevorgang. Ein AC-Ladevorgang wäre auch bei den Elektrofahrzeugen 10.1 und 10.2 möglich, da diese auch an das TN-Niederspannungsnetz 6 angeschlossen werden können. Die Elektrofahrzeuge 10.1 und 10.2 werden jedoch, wie oben beschrieben ist, im IT Niederspannungsnetz 17.1, 17.2 mit einem DC-Ladevorgang geladen.

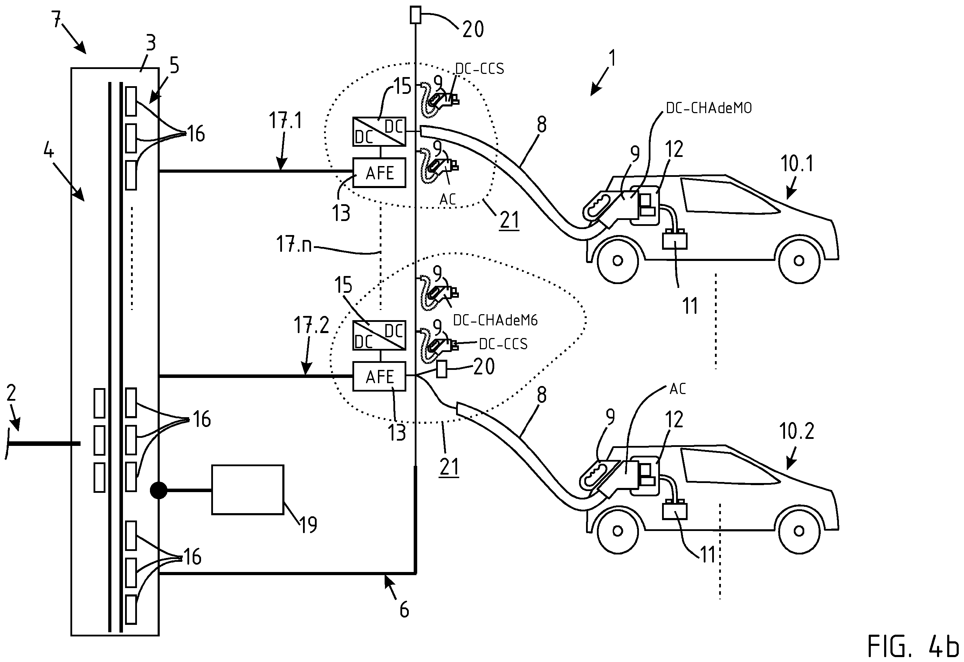

Figur 4b zeigt eine analoge Ausführungsvariante, wobei hier jedes IT Niederspannungsnetz 17.1, 17.n, 17.2 einen Ladepunkt 21 ausbildet. Ein Ladepunkt 21 ist beispielsweise dann eine Ladesäule. Jeder Ladepunkt 21 weist bis zu drei Ladestecker 9 auf. Diese können derart aufgeteilt sein, dass in je einem Ladepunkt 21 zwei Ladestecker 9 für das DC-Laden vorgesehen sind. Ein Ladestecker 9 kann den Standard DC-CCS und ein weiterer Ladestecker 9 kann für den DC-CHAdeMO Standard ausgebildet sein. Ein dritter Ladestecker 9 kann für das AC-Laden vorgesehen sein.

Somit können an jedem Ladepunkt 21 über den Anschluss an den Mittelspannungstransformator 3 bis zu drei Ladestecker 9 ausgebildet sein. Damit ist es möglich, verschiedene Ladestandards an einem Ladepunkt 21, mithin einer Ladesäule zur Verfügung zu stellen. Beispielsweise wird das auf die Bildebene bezogen obere Elektrofahrzeug 10.1 in dem Standard DC-CHAdeMO geladen und das untere Elektrofahrzeug 10.2 mit einem AC-Ladevorgang geladen.

Es ist im Rahmen der Erfindung jedoch auch möglich, die einzelnen Ladepunkte 21 untereinander unterschiedlich auszustatten. Dies kann bedeuten, ein Ladepunkt 21 kann beispielsweise nur einen DC-Ladestecker aufweisen. Dieser kann wahlweise nach dem DC-CCS Standard oder nach dem DC-CHAdeMO Standard oder auch einem weiteren Standard ausgebildet sein. Ein weiterer Ladepunkt 21 dieser Ladestation 7 kann dann zwei oder auch drei Ladestecker 9 aufweisen. Beispielsweise können zwei Ladestecker 9 für das DC-Laden vorgesehen sein, einer für das DC-CHAdeMO Laden, ein weiterer für das DC-CCS Laden. Ein dritter Ladestecker 9 wäre dann für einen AC-Ladevorgang vorgesehen. Es können beliebig viele weitere Ladepunkte 21 an die Ladeanordnung 1 angeschlossen werden. Ein jeder Ladepunkt 21 kann dann eine individuelle Anzahl an Ladesteckern 9 aufweisen. Insbesondere kann für jeden Ladepunkt 21 individuell festgelegt werden, ob dieser für DC-Laden, AC-Laden oder kombiniertes DC- und AC-Laden oder zur gleichzeitigen Bereitstellung von DC- und AC-Ladevorgängen vorgesehen sein soll.

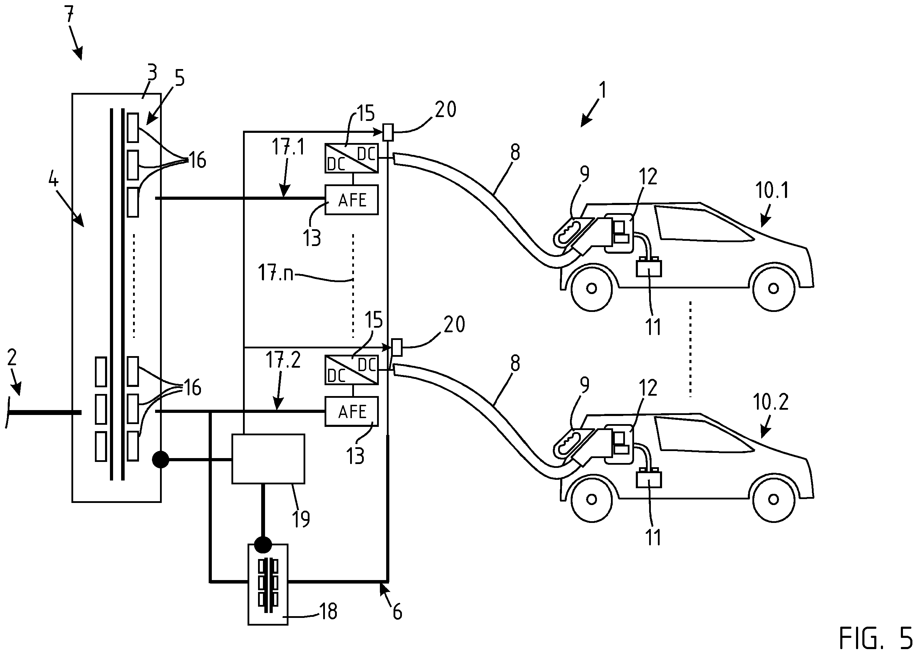

Figur 5 zeigt einen ähnlichen Aufbau zu Figur 4, mit dem Unterschied, dass das TN-Niederspannungsnetz 6 über einen Niederspannungstransformator 18 in dem IT-Niederspannungsnetz 17.2 realisiert wird. Die Lademanagementeinrichtung 19 ist dann ebenfalls mit dem Niederspannungstransformator 18 verbunden. Gemäß Figuren 4 und 5 können somit mehrere Elektrofahrzeuge 10.1, 10.2 gleichzeitig mit jeweils AC- oder DC-Ladevorgängen geladen werden. Im Falle von AC-Ladevorgängen werden alle AC-Ladevorgänge über das TN-Niederspannungsnetz 6 mit Spannung versorgt. Im Falle eines DC-Ladevorganges wird dann ein jeweiliges Elektrofahrzeug 10 aus jeweils einem IT-Niederspannungsnetz 17 mit Spannung versorgt.

Die für den Ladevorgang notwendige Ladeleistung ist nicht über die Zeit hinweg konstant. Sie steigt ab dem Start des Ladevorganges zunächst an, bis die maximale Ladespannung erreicht wird. Danach nimmt die Ladeleistung wiederum ab. Dies bedeutet, zu dem Zeitpunkt, an dem die maximale Ladeleistung zur Verfügung gestellt werden muss, muss auch die Ladestation 7 diesem einen Elektrofahrzeug 10 die maximale Ladeleistung zur Verfügung stellen. Im Praxisbetrieb werden jedoch nicht zwei oder mehr Fahrzeuge exakt gleichzeitig mit dem gleichen Entladezustand der Traktionsbatterie 11 an die Ladestation 7 angeschlossen, sondern zeitlich versetzt. Soll jedem Elektrofahrzeug 10 die maximale Ladeleistung zur Verfügung gestellt werden, bedeutet dies nicht, dass die Ladestation 7 dazu ausgelegt werden muss, n (n = Anzahl der angeschlossenen Elektrofahrzeuge) mal die maximale Ladeleistung zur Verfügung stellen zu können. Im Prinzip muss die Ladestation 7 nur einmal die maximale Ladeleistung zur Verfügung stellen können, bzw. eine geringfügig, beispielsweise bei 2mal über der maximal benötigten Ladeleistung für ein Elektrofahrzeug 10 zur Verfügung stellen. Dies bestimmt die Auslegung der Leistungsfähigkeit des Mittelspannungstransformators 3. Die maximale Ladeleistung eines Elektrofahrzeuges sollte im Rahmen der Erfindung bei 350 kW liegen, mithin die maximale Ladeleistung des Mittelspannungstransformators bei kleiner 700 kW. Es ist somit möglich, mindestens zwei, insbesondere mehrere Elektrofahrzeug 10 zeitgleich zu laden mit der zum jeweiligen Ladezeitpunkt eines Elektrofahrzeuges 10 benötigten größtmöglichen Ladeleistung, welche jedoch nicht der zu einem Zeitpunkt jeweils maximalen Ladeleistung entspricht. Es entsteht somit trotz im Vergleich zum Stand der Technik geringer dimensioniertem Mittelspannungstransformator 3 keine negative Beeinträchtigung der Ladedauer. Jedes Elektrofahrzeug 10 kann somit zeiteffektiv, mithin mit kürzestmöglicher Ladezeit und zu einem jeweiligen Zeitpunkt zeitabhängig größtmöglicher benötigter Ladeleistung geladen werden. Dabei spielt es keine Rolle, ob sich die Elektrofahrzeuge im AC- und/oder DC-Ladebetrieb befinden. Es sind lediglich die Ladeleistungen relevant.

Dieser Ladevorgang wird beispielhaft in Figur 6 dargestellt. Das Elektrofahrzeug 10.1 weist eine maximale Ladeleistung P 10.1 zum Zeitpunkt t 10.1 auf. Genauso, wie es die Elektrofahrzeuge 10.2 und 10.3 tun. Die jeweils maximal benötigte Ladeleistung eines jeden Elektrofahrzeuges 10 ist voneinander verschieden. Das Elektrofahrzeug 10.3 benötigt die größte Ladeleistung P 10.3 in Relation zu den anderen Elektrofahrzeugen 10.1, 10.2. Dies kann zweierlei Gründe haben. Zum einen ist der Entladezustand der Traktionsbatterie 11 des Elektrofahrzeugs 10.3 anders als bei den Elektrofahrzeugen 10.2 und 10.3 und/oder die Traktionsbatterie 11 bzw. das Onboard-Lademanagement 12 des Elektrofahrzeugs 10.3 können eine größere Ladeleistung verarbeiten. Aus dem schematischen Leistungs-Zeit-Diagramm in Fig. 6 wird deutlich, dass nicht zu einem Zeitpunkt ein n-facher Wert der jeweils maximalen Ladeleistung P10.1, P10.2, P10.3 benötigt wird, sondern die jeweils maximale Ladeleistung zeitlich versetzt benötigt wird. Somit ist es selbst beim zeitlich überschnittenen Laden von drei Elektrofahrzeugen 10.1, 10.2, 10.3 ausreichend, über die Ladestation 7 eine maximale Ladeleistung, die beispielsweise dem 1,5-fachen der maximalen Ladeleistung P10.3 des Elektrofahrzeuges 10.3 entspricht, bereitzustellen.

Die erfindungsgemäße Ladeanordnung 1 kann derart ausgelegt werden, dass in jedem IT-Niederspannungsnetz 17 und dem TN-Niederspannungsnetz 6 die individuell für das Elektrofahrzeug 10 benötigte maximale Ladeleistung zu einem Zeitpunkt an den Sekundärseiten 5 des Mittelspannungstransformators 3 abgegriffen wird. Sollten zu einem Zeitpunkt die aktuell benötigte Ladeleistungen P10.1, P10.2, P10.3 aller Elektrofahrzeuge 10.1, 10.2, 10.3 zusammen die maximal dimensionierte, durch den Mittelspannungstransformator 3 zur Verfügung zu stellende Leistung auf der Sekundärseite 5 überschreiten, kann die Lademanagementeinrichtung 19 eingreifen und die benötigten Ladeleistungen reduzieren und die zur Verfügung stehende Ladeleistung aufteilen. Für den Ladevorgang eines jeden Elektrofahrzeugs 10 ist ein solcher temporärer Eingriff unter Umständen jedoch zu vernachlässigen bzw. kaum spürbar.

Gemäß der Figuren 4 oder 5 können mehrere Ladesäulen an einem Mittelspannungstransformator 3 angeschlossen sein, so dass mehrere Elektrofahrzeuge 10 gleichzeitig mit AC- und/oder DC Ladung geladen werden können.

Die bei der Ladung notwendige Ladeleistung P eines Elektrofahrzeuges 10 ist über die Zeit t hinweg nicht konstant, sondern steigt ab Ladestart zunächst an, bis die maximale benötigte Ladespannung erreicht wird. Dies ist auch der Zeitpunkt zu dem die entsprechende Ladesäule für dieses Elektrofahrzeug die maximale Ladeleistung P zur Verfügung stellen muss. Danach klingt die Ladeleistung P wieder ab, da auch der Ladestrom reduziert wird. In der Praxis werden zwei Elektrofahrzeuge 10 nie exakt zum gleichen Zeitpunkt angeschlossen eine jeweilige Ladesäule angeschlossen und/oder die parallel anschlossenen Elektrofahrzeuge 10 haben unterschiedliche Ladezustände. Somit ist der Ladestart und/oder die aktuell benötigte Ladeleistung P typischerweise zeitversetzt.

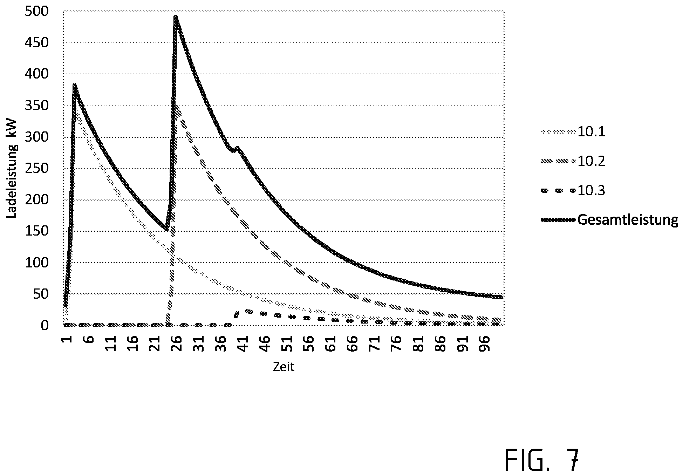

In Figur 7 ist nun exemplarisch eine Ladeanordnung 1 mit drei Elektrofahrzeugen 10 gezeigt. Es werden verschiedene strichpunktierte Linien dargestellt für die Elektrofahrzeuge (=Fahrzeug). Die durchgezogene Linie entspricht der jeweils benötigten Gesamtleistung. Für das erste Elektrofahrzeug 10.1 ist die Bezeichnung Fahrzeug 1 gewählt, für das zweite Elektrofahrzeug 10.2 die Bezeichnung Fahrzeug 2 und für das dritte Elektrofahrzeug 10.3 die Bezeichnung Fahrzeug 3. Es beginnt zu unterschiedlichen Zeitpunkten der jeweilige Ladevorgang eines jeden Elektrofahrzeuges 10. Zum Zeitpunkt t1 wird das erste Elektrofahrzeug 10 mit einer maximalen Ladeleistung P von 350kW begonnen. Dies entspricht dann auch der aktuell benötigten Gesamtleistung. Zu einem späteren Zeitpunkt t26 wird ein zweites Elektrofahrzeug 10 angeschlossen und ebenfalls mit maximal 350 kW geladen. Das dritte Elektrofahrzeug 10 wird zum Zeitpunkt t41 mit einer AC-Ladung betrieben (maximal bspw. etwa 22 kW). Die jeweils aktuell benötigte Gesamtleitung auf der Sekundärseite 5 des Mittelspannungstransformators 3 ist in der Kurve mit durchgezogener Linie dargestellt. Sie erreicht bei diesem Beispiel maximal knapp 460 kW.

Hier zeigt sich der Vorteil der Erfindung: Es können mehrere Ladungen mit jeweils maximaler benötigter Ladeleistung P eines Elektrofahrzeuges 10 von 350 kW an einer Ladeanordnung 1 durchgeführt werden, obwohl der Mittelspannungstransformator 3 mit einer geringeren maximalen Ladeleistung P auf der Sekundärseite 5 kleiner dem zweifachen der durch die Elektrofahrzeuge 10 benötigten maximalen Ladeleistung P betrieben werden. Der Mittelspannungstransformator 3 kann somit auf der Sekundärseite 5 eine maximale Ladelistung P von zum Beispiel 500kW aufweisen, anstatt 2*350kW = 700 kW, was die Herstellkosten reduziert. Wird dagegen die Ladeanordnung 1 gemäß Fig. 1 nach Stand der Technik aufgebaut, muss jede Ladesäule und somit jeder Resonanzkonverter für je 350 kW ausgelegt werden, was entsprechend hohe Kosten darstellt.

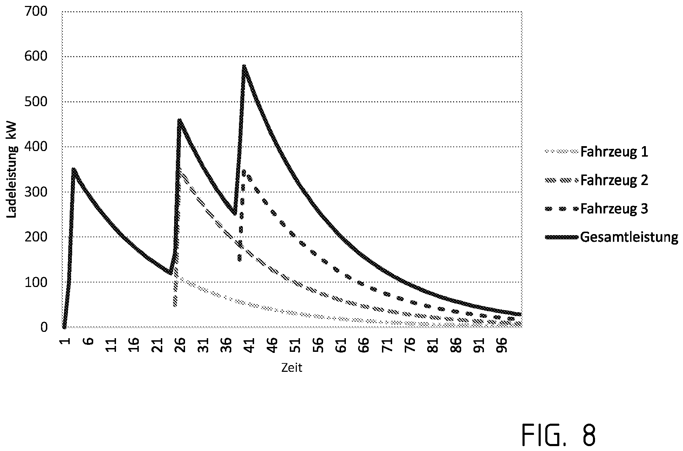

In Fig. 8 wird weiterhin gezeigt, wie die Gesamtleistung sich aufteilt, wenn das dritte Elektrofahrzeug 10 auch mit einer 350kW-Ladung geladen werden soll. Dann würde zwischen t41 und t46 die zulässige Gesamtleistung von beispielhaft 500kW überschritten. Hier kommt nun die Lademanagementeinrichtung 19 zum Einsatz: Diese ermittelt die jeweils aktuell benötigte Gesamtleistung aller Ladevorgänge. Zum Zeitpunkt t41 wird ermittelt, dass die Ladeleistung P begrenzt werden muss. Dies wird dadurch realisiert, dass die Lademanagementeinrichtung 19 eingreift und bspw. über das entsprechende Lade Kommunikationsmodul 20 die zur Verfügung stehende Ladeleistung P des Elektrofahrzeuges 10.3 temporär reduziert und/oder begrenzt.

Durch kurzzeitige Reduzierung der maximalen Ladeleistung P von Elektrofahrzeug 10.3 durch die Lademanagementeinrichtung 19 wird die Gesamtleitung am Mittelspannungstransformator von 500 kW nicht überschritten. Der Ladevorgang des dritten Fahrzeuges 10.3 wird aber nur bedingt verlängert.

Ein weiterer Vorteil der Erfindung liegt darin, dass der Mittelspannungstransformator 3 kurzzeitig (mehrere Minuten bis zu 30 Minuten) bei einer erhöhten Überlast von beispielhaft dem Faktor 1,5 betrieben werden kann. Um die Überlast des Mittelspannungstransformators 3 zu überwachen, kann die Temperatur der Transformator-Wicklungen und/oder die Temperatur des Transformatorkernes kontrolliert werden. Die Lademanagementeinrichtung 19 kann somit durch die Überwachung der Temperatur die maximale Gesamtleistung bedarfsgerecht erhöhen. Die Erhöhung findet bevorzugt maximal um den Faktor 1,5 statt.

Im Rahmen der Erfindung kann die Gesamtleistung des Mittelspannungstransformators 3 auf der Sekundärseite 5 auf kleiner gleich der maximalen Ladeleistung eines Elektrofahrzeuges, beispielsweise kleiner gleich (≤) 350 kW dimensioniert werden. Es können jedoch mehrere Elektrofahrzeuge 10 mit einer maximalen Ladeleistung P nach dem o.g. Schema gleichzeitig geladen werden. Die Lademanagementeinrichtung 19 muss zur Ermittlung der jeweils individuell benötigten maximalen Ladeleistung P eines Elektrofahrzeuges 10 die Informationen der aktuellen Ladeleistung der einzelnen Ladungen mitgeteilt bekommen. Dies kann über die Kommunikationsmodule kabelgebunden oder drahtlos für jedes Elektrofahrzeug separat erfolgen. Alternativ kann auch die Lademanagementeinrichtung 19 die aktuelle Ladeleistung P mit Sensoren messen. Die Temperaturen des Mittelspannungstransformators 3 (Kern und/oder Wicklungen) werden gemessen und ebenfalls der Lademanagementeinrichtung 19 mitgeteilt. Durch diese Messungen kann die Lademanagementeinrichtungen 19 die jeweils aktuellen Ladeleistungen P auswerten und die jeweils maximalen Ladeleistungen P für ein jedes Elektrofahrzeug festlegen und ggf. reduzieren.

### Bezuqszeichen:

- 1 -: Ladeanordnung
- 2 -: Mittelspannungsnetz
- 3 -: Mittelspannungstransformator
- 4 -: Primärseite zu 3
- 5 -: Sekundärseite zu 3
- 6 -: TN-Niederspannungsnetz
- 7 -: Ladestation
- 8 -: Ladekabel
- 9 -: Ladestecker
- 10 -: Elektrofahrzeug
- 10.1 -: Erstes Elektrofahrzeug
- 10.2 -: Zweites Elektrofahrzeug
- 10.3 -: Drittes Elektrofahrzeug
- 11 -: Traktionsbatterie
- 12 -: Onboard-Lademanagement
- 13 -: Umrichter
- 14 -: Potentialtrennung
- 15 -: Ausgleichssteller
- 16 -: Sekundärwicklung
- 17 -: IT-Niederspannungsnetz
- 18 -: Niederspannungstransformator
- 19 -: Lademanagementeinrichtung
- 20 -: Ladekommunikationsmodul
- 21 -: Ladepunkt

- P -: Ladeleistung
- t -: Zeit

## Patentansprüche

1. Ladeanordnung (1) für ein Elektrofahrzeug (10) mit einer Traktionsbatterie (11), aufweisend eine Ladestation (7), direkt angeschlossen an ein Mittelspannungsnetz (2) und ein Ladekabel (8) zur Koppelung mit dem Elektrofahrzeug (10), wobei in der Ladestation (7) ein Mittelspannungstransformator (3) angeordnet ist, an welchem auf einer Primärseite (4) die Mittelspannung anliegt **dadurch gekennzeichnet, dass** auf einer Sekundärseite (5) mindestens ein IT Niederspannungsnetz (17) und ein davon elektrisch getrenntes TN Niederspannungsnetz (6) ausgebildet sind und dass eine Lademanagementeinrichtung (19) dem Mittelspannungstransformator (3) zugeordnet ist, wobei die Lademanagementeinrichtung (19) alle Niederspannungsnetze (6, 17) regelt oder steuert.

2. Ladeanordnung (1) nach Anspruch 1, **dadurch gekennzeichnet, dass** das TN Niederspannungsnetz (6) durch mindestens eine zusätzliche Sekundärwicklung (16) direkt an dem Mittelspannungstransformator (3) ausgebildet ist oder dass das TN Niederspannungsnetz (6) durch einen Niederspannungstransformator (18) ausgebildet ist, wobei der Niederspannungstransformator (18) in einem Sekundärkreis auf der Sekundärseite (5) des Mittelspannungstransformators (3) angeordnet ist.

3. Ladeanordnung (1) nach Anspruch 1 oder 2, **dadurch gekennzeichnet, dass** das TN-Niederspannungsnetz (6) für AC Ladevorgänge verwendet wird und/oder dass das IT-Niederspannungsnetz (17) für DC Ladevorgänge verwendet wird.

4. Ladeanordnung (1) nach einem der Ansprüche 1 bis 3, **dadurch gekennzeichnet, dass** mindestens ein zweites IT Niederspannungsnetz (17) an dem Transformator ausgebildet ist, vorzugsweise über eine weitere Sekundärwicklung (16).

5. Ladeanordnung (1) nach Anspruch 4, **dadurch gekennzeichnet, dass** die IT Niederspannungsnetze (17) auf der Sekundärseite (5) getrennt ausgebildet sind.

6. Ladeanordnung (1) nach einem der Ansprüche 1 bis 5, **dadurch gekennzeichnet, dass** die maximale Ladeleistung des Mittelspannungstransformators (3) auf der Sekundärseite (5) kleiner gleich 700 kW ist, wobei die Ladeleistung eines jeden Ladevorganges für ein Elektrofahrzeug (10) von der Lademanagementeinrichtung (19) ermittelt wird und dieser Wert dem entsprechenden Ladekommunikationsmodul (20) mitgeteilt wird, und somit im Ladevorgang berücksichtigt wird.

7. Ladeanordnung (1) nach einem der Ansprüche 1 bis 6, **dadurch gekennzeichnet, dass** in dem IT Niederspannungsnetz (17) ein Umrichter (13) und/oder ein Ausgleichssteller (15) vorgesehen sind.

8. Ladeanordnung (1) nach einem der Ansprüche 1 bis 7, **dadurch gekennzeichnet, dass** in dem Ladekabel (8), insbesondere in dem Ladestecker (9), ein Spannungskonverter angeordnet ist, wobei bevorzugt eine Spannung größer 900V, insbesondere größer 1000V durch das Ladekabel (8) übertragen wird, die dann durch den Spannungskonverter in dem Ladestecker (9) auf eine kleinere Ladespannung konvertiert wird.

9. Ladeanordnung (1) nach einem der Ansprüche 1 bis 8, **dadurch gekennzeichnet, dass** in einem Ladestecker (9) ein Kommunikationsmodul zur Kommunikation mit der Lademanagementeinrichtung (19) und/oder mit dem Elektrofahrzeug (10) vorgesehen ist.

10. Verfahren zum Betreiben einer Ladeanordnung (1) mit den Merkmalen von mindestens Anspruch 1, **dadurch gekennzeichnet, dass** mindestens n-Elektrofahrzeuge (10) gleichzeitig in verschiedenen IT Niederspannungsnetzen (17) geladen werden, wobei n ≥ 2 (größer gleich) sowie optional mindestens ein weiteres Elektrofahrzeug im TN-Niederspannungsnetz (6) geladen wird, wobei die maximal zur Verfügung stehende Ladeleistung (P) auf der Sekundärseite (5) des Mittelspannungstransformators (17) kleiner als die benötigte maximale Ladeleistung (P) von den n Elektrofahrzeugen (10) ist, insbesondere kleiner als die 1,5 fache maximal benötigte Ladeleistung (P) eines Elektrofahrzeuges (10), bevorzugt ist die Ladeleistung (P) auf der Sekundärseite (5) des Mittelspannungstransformators (3) gleich der maximal benötigten Ladeleistung (P) eines Elektrofahrzeuges (10), wobei eine Lademanagementeinrichtung (19) eingreift, wenn die zu einem Zeitpunkt benötigte Ladeleistung (P) von zwei oder mehrere Elektrofahrzeugen (10) zusammen addiert größer ist, als die zur Verfügung stehende Ladeleistung (P), indem für ein oder mehrere Elektrofahrzeuge (10) die jeweils dem Elektrofahrzeug (10) zur Verfügung gestellte Ladeleistung (P) temporär reduziert wird.

11. Verfahren zum Betreiben einer Ladeanordnung (1) mit den Merkmalen von mindestens Anspruch 1, **dadurch gekennzeichnet, dass** die maximal verfügbare Ladeleistung (P) auf der Sekundärseite (5) des Mittelspannungstransformators temporär um bis das 1,5fache überschritten wird.

12. Verfahren zum Betreiben einer Ladeanordnung (1) mit den Merkmalen von mindestens Anspruch 1, **dadurch gekennzeichnet, dass** ein Elektrofahrzeug (10) in dem IT-Niederspannungsnetz (17) und ein weiteres Elektrofahrzeug in dem TN-Niederspannungsnetz (6) zumindest temporär gleichzeitig geladen werden.

## Claims

1. Charging arrangement (1) for an electric vehicle (10) with a traction battery (11), having a charging station (7) connected directly to a medium-voltage grid (2) and a charging cable (8) to be coupled to the electric vehicle (10), wherein in the charging station (7) is arranged a medium-voltage transformer (3) at which the medium voltage is present on a primary side (4), **characterised in that** at least one IT low-voltage grid (17) and a TN low-voltage grid (6) electrically isolated therefrom are formed on a secondary side (5), and **in that** a charging management apparatus (19) is assigned to the medium-voltage transformer (3), wherein the charging management apparatus (19) regulates or controls all of the low-voltage grids (6, 17).

2. Charging arrangement (1) according to claim 1, **characterised in that** the TN low-voltage grid (6) is formed directly on the medium-voltage transformer (3) by at least one additional secondary winding (16) or **in that** the TN low-voltage grid (6) is formed by a low-voltage transformer (18), wherein the low-voltage transformer (18) is arranged in a secondary circuit on the secondary side (5) of the medium-voltage transformer (3).

3. Charging arrangement (1) according to claim 1 or 2, **characterised in that** the TN low-voltage grid (6) is used for AC charging procedures and/or **in that** the IT low-voltage grid (17) is used for DC charging procedures.

4. Charging arrangement (1) according to any of claims 1 to 3, **characterised in that** at least one second IT low-voltage grid (17) is formed on the transformer, preferably by a further secondary winding (16).

5. Charging arrangement (1) according to claim 4, **characterised in that** the IT low-voltage grids (17) are formed so as to be isolated on the secondary side (5).

6. Charging arrangement (1) according to any of claims 1 to 5, **characterised in that** the maximum charging power of the medium-voltage transformer (3) on the secondary side (5) is less than or equal to 700 kW, wherein the charging power of each charging procedure for an electric vehicle (10) is determined by the charging management apparatus (19) and this value is communicated to the corresponding charging communication module (20) and is thus taken into account in the charging procedure.

7. Charging arrangement (1) according to any of claims 1 to 6, **characterised in that** a converter (13) and/or a compensation controller (15) are provided in the IT low-voltage grid (17).

8. Charging arrangement (1) according to any of claims 1 to 7, **characterised in that** a voltage converter is arranged in the charging cable (8), in particular in the charging plug (9), wherein a voltage of greater than 900 V, in particular greater than 1000 V, is preferably transmitted by the charging cable (8) and is then converted to a smaller charging voltage by the voltage converter in the charging plug (9).

9. Charging arrangement (1) according to any of claims 1 to 8, **characterised in that** a communication module for communication with the charging management apparatus (19) and/or with the electric vehicle (10) is provided in a charging plug (9).

10. Method for operating a charging arrangement (1) having the features of at least claim 1, **characterised in that** at least n electric vehicles (10) are charged simultaneously in different IT low-voltage grids (17), wherein n ≥ (greater than or equal to) 2, and optionally at least one further electric vehicle is charged in the TN low-voltage grid (6), wherein the maximum available charging power (P) on the secondary side (5) of the medium-voltage transformer (17) is less than the required maximum charging power (P) of the n electric vehicles (10), in particular less than 1.5 times the maximum required charging power (P) of an electric vehicle (10), and the charging power (P) on the secondary side (5) of the medium-voltage transformer (3) is preferably equal to the maximum required charging power (P) of an electric vehicle (10), wherein a charging management apparatus (19) intervenes when the charging power (P), required at a time, of two or more electric vehicles (10) added together is greater than the available charging power (P) by temporarily reducing the charging power (P) respectively made available to the electric vehicle (10) for one or more electric vehicles (10).

11. Method for operating a charging arrangement (1) having the features of at least claim 1, **characterised in that** the maximum available charging power (P) on the secondary side (5) of the medium-voltage transformer is temporarily exceeded by up to 1.5 times.

12. Method for operating a charging arrangement (1) having features of at least claim 1, **characterised in that** an electric vehicle (10) in the IT low-voltage grid (17) and a further electric vehicle in the TN low-voltage grid (6) are at least temporarily charged simultaneously.

## Revendications

1. Dispositif de charge (1) destiné à un véhicule électrique (10) présentant une batterie de traction (11), comprenant une station de charge (7) en connexion directe avec un réseau moyenne tension (2) et un câble de charge (8) pour un couplage au véhicule électrique (10), dans lequel un transformateur moyenne tension (3) est agencé dans la station de charge (7), auquel la moyenne tension est appliquée sur un côté primaire (4), **caractérisé en ce qu'**au moins un réseau basse tension IT (17) et un réseau basse tension TN (6) séparé électriquement de celui-ci sont formés sur un côté secondaire (5), et **en ce qu'**un dispositif de gestion de charge (19) est associé au transformateur moyenne tension (3), dans lequel le dispositif de gestion de charge (19) régule ou commande tous les réseaux basse tension (6, 17).

2. Dispositif de charge (1) selon la revendication 1, **caractérisé en ce que** le réseau basse tension TN (6) est formé par au moins un enroulement secondaire supplémentaire (16) directement sur le transformateur moyenne tension (3), ou **en ce que** le réseau basse tension TN (6) est formé par un transformateur basse tension (18), dans lequel le transformateur basse tension (18) est disposé dans un circuit secondaire sur le côté secondaire (5) du transformateur moyenne tension (3).

3. Dispositif de charge (1) selon la revendication 1 ou 2, **caractérisé en ce que** le réseau basse tension TN (6) est utilisé pour des opérations de charge AC et/ou que le réseau basse tension IT (17) est utilisé pour des opérations de charge DC.

4. Dispositif de charge (1) selon l'une quelconque des revendications 1 à 3, **caractérisé en ce qu'**au moins un second réseau basse tension IT (17) est formé au niveau du transformateur, de préférence par l'intermédiaire d'un enroulement secondaire supplémentaire (16).

5. Dispositif de charge (1) selon la revendication 4, **caractérisé en ce que** les réseaux basse tension IT (17) sont conçus séparément du côté secondaire (5).

6. Dispositif de charge (1) selon l'une des revendications 1 à 5, **caractérisé en ce que** la puissance de charge maximale du transformateur moyenne tension (3) sur le côté secondaire (5) est inférieure ou égale à 700 kW, dans lequel la puissance de charge de chaque opération de charge destinée à un véhicule électrique (10) est déterminée par le dispositif de gestion de charge (19) et cette valeur est communiquée au module de communication de charge (20) correspondant et est ainsi prise en compte dans l'opération de charge.

7. Dispositif de charge (1) selon l'une des revendications 1 à 6, **caractérisé en ce qu'**un convertisseur (13) et/ou un régulateur d'égalisation (15) sont prévus dans le réseau basse tension IT (17).

8. Dispositif de charge (1) selon l'une quelconque des revendications 1 à 7, **caractérisé en ce qu'**un convertisseur de tension est agencé dans le câble de charge (8), en particulier dans la fiche de charge (9), dans lequel une tension supérieure à 900 V, en particulier supérieure à 1000 V, est de préférence transmise à travers le câble de charge (8), qui est ensuite convertie par le convertisseur de tension dans la fiche de charge (9) en une tension de charge inférieure.

9. Dispositif de charge (1) selon l'une quelconque des revendications 1 à 8, **caractérisé en ce qu'**un module de communication pour une communication avec le dispositif de gestion de charge (19) et/ou avec le véhicule électrique (10) est prévu dans une fiche de charge (9).

10. Procédé pour faire fonctionner un dispositif de charge (1) présentant les caractéristiques d'au moins la revendication 1, **caractérisé en ce qu'**au moins n véhicules électriques (10) sont chargés simultanément dans différents réseaux basse tension IT (17), n ≥ 2 (supérieur ou égal à), et facultativement au moins un véhicule électrique étant chargé dans le réseau basse tension TN (6), dans lequel la puissance de charge maximale disponible (P) sur le côté secondaire (5) du transformateur moyenne tension (17) est inférieure à la puissance de charge maximale (P) requise par les n véhicules électriques (10), en particulier inférieure à 1,5 fois la puissance de charge maximale (P) requise par un véhicule électrique (10), la puissance de charge (P) sur le côté secondaire (5) du transformateur moyenne tension (3) est de préférence égale à la puissance de charge maximale (P) requise par un véhicule électrique (10), dans lequel un dispositif de gestion de charge (19) intervient, lorsque la puissance de charge (P) requise à la fois par deux ou plusieurs véhicules électriques (10) additionnés est supérieure à la puissance de charge disponible (P), en réduisant temporairement pour un ou plusieurs véhicules électriques (10), la puissance de charge respective (P) mise à la disposition du véhicule électrique (10).

11. Procédé pour faire fonctionner un dispositif de charge (1) présentant les caractéristiques d'au moins la revendication 1, **caractérisé en ce que** la puissance de charge maximale disponible (P) sur le côté secondaire (5) du transformateur moyenne tension est temporairement dépassée jusqu'à 1,5 fois.

12. Procédé pour faire fonctionner un dispositif de charge (1) présentant les caractéristiques d'au moins la revendication 1, **caractérisé en ce qu'**un véhicule électrique (10) dans le réseau basse tension IT (17) et un véhicule électrique supplémentaire dans le réseau basse tension TN (6) sont chargés au moins temporairement simultanément.
